# EUROPEAN PATENT APPLICATION

(11) **EP 4 484 520 A1**
(43) Date of publication of application: **01.01.2025**
(21) Application number: 23182730.4
(22) Date of filing: 30.06.2023
(51) Int. Cl.: C09K 11/02, C09K 11/85

(54) **A DUAL-BAND LUMINESCENT NANOPARTICLE, A LUMINESCENT POLYMER FILM COMPRISING THEREOF, A MANUFACTURING METHOD OF DUAL BAND LUMINESCENT NANOPARTICLE, A MANUFACTURING METHOD OF THE LUMINESCENT POLYMER FILM AND APPLICATION THE LUMINESCENT POLYMER FILM**

(71) Applicant: Lumekko Sp. z o.o., 15-540 Bialystok (PL)
(72) Inventor: Szczeszak, Agata, 60-185 Skorzewo (PL); Czajka, Justyna, 86-031 Jagodowo (PL)
(74) Representative: JWP Patent & Trademark Attorneys

(57) **Abstract**

The present invention discloses a dual-band luminescent nanoparticle and luminescent film comprising thereof. The invention encompasses also a method for manufacturing the dual-band luminescent nanoparticle and method for manufacturing of luminescent film and an application of the luminescent fil for safeguarding packaging and paper documents.

## Description

The present invention discloses a dual-band luminescent nanoparticle and luminescent film comprising thereof. The invention encompasses also a method for manufacturing the dual-band luminescent nanoparticle and method for manufacturing of luminescent film and an application of the luminescent fil for safeguarding packaging and paper documents.

Various luminescent nanoparticles are known for their luminescent properties in relation to the presence of lanthanide ions in their structure. There are also a number of preparation methods of such nanomaterial.

The article of D. Gao et.al, DOI. 10.1039/c2dt31814h performs the nanorods of NaYF₄ doped with Yb³⁺, Er³⁺ and Tm³⁺ ions. The luminescence of the material is activated in UV and NIR regions. However, there is no determined composition of the dopant ions, which shows the emission under NIR excitation with the emission band with a maximum of about 800 nm as an effect of the ³H₄→³H₆ transition. Changing the dopant ions concentration has not resulted in significant changes in color. Moreover, the nanoparticles were obtained in a low-volume autoclave, which is a limitation for scaling up the process.

The article of R. Rafique et. Al, DOI. 10.1016/j.msec.2019.02.046 shows the preparation of the up-converting nanoparticles NaYF₄ doped with Yb³⁺ and Er³⁺ under hydrothermal conditions. However, the particles exhibit the visible emission only under NIR excitation. Furthermore, the nanoparticles were obtained in a low-volume autoclave, which is a limitation for scaling up the process.

Another issue is polymers infused with nanoparticles of specific properties which can serve as counterfeiting prevention material in a number of applications. Various polymers are known to be modified with luminescent nanoparticles with different methods.

Patent US5585160A describes a method for producing a fluorescent foil that emits visible light upon ultraviolet radiation activation. However, this foil does not demonstrate the capability to emit colored visible light when excited by near-infrared radiation. Additionally, the patent does not disclose a two-step identification process involving emission spectra analysis, which would provide a fingerprint-like identification of the emitted light beyond naked-eye observation.

Patent EP0066854B1 discloses a method for preparing a thin film by utilizing gel-like luminophores, which are applied as coatings on the foil. However, this method requires switching to a different film within a single film, which introduces technical challenges and complicates the production process. Furthermore, the patent does not demonstrate the emission of colorful visible light under near-infrared excitation. Additionally, in order to observe changes in color, the production of different compounds is necessary.

Patent EP 3663377B1 discloses a method for preparing an adhesive layer coated with luminescence. However, the patent does not demonstrate the emission of colorful visible light under near-infrared or ultraviolet excitation. Additionally, in order to observe changes in color, the production of different compounds and then films is necessary. Furthermore, this method necessitates transitioning to a different film within a single film, posing technical challenges and adding complexity to the production process. Finally, the patent does not disclose a two-step identification process that includes emission spectra analysis. Such a process is crucial for achieving a fingerprint-like identification of the emitted light, surpassing the limitations of naked-eye observation.

In summary there is a need for nanomaterials such as nanoparticles doped with lanthanide ions exhibiting dual-band emission in visible region upon UV and NIR excitation, which can be observed easily with naked eye. Disclosed solutions do not provide such nanomaterials. Moreover, synthesis of such nanomaterials is also a subject of many scientific investigations as scaling up of such processes is still difficult or impossible to achieve. Luminescent films of potential anticounterfeiting applications are also being the subject of scientific research especially in terms of their flexibility enabling the application in many fields (documents, banknotes, packaging etc.) and even distribution of nanomaterial within polymer matrix giving reliable spectroscopic response upon UV and NIR excitation allowing two-step identification of documents or other subjects that might be counterfeited.

The subject of the invention is a dual-band luminescent nanoparticle comprising host nanocrystal doped with lanthanide ions, characterised in that the host nanocrystal is the nanocrystal of rare earth element fluorides of following formula:

NaREF₄

where RE - yttrium, gadolinium
doped with lanthanides ions selected from the group comprising ytterbium Yb³⁺ ions, thulium Tm³⁺ ions, europium Eu³⁺ ions and combination thereof; wherein the ions are included into the host nanocrystal in amount between 10% to 25% for ytterbium Yb³⁺, preferably 20%, in amount between 0.25% to 1% for thulium Tm³⁺, preferably 0,5% and in amount between 1% to 7% for europium Eu³⁺, preferably 5%.

Preferably average grain size of the nanoparticle is between 50 - 70 nm.

Preferably the dual-band nanoparticle according to the ivention emits visible light upon NIR and UV light excitation.

Preferably NIR ranges between 900 -1000 nm and UV ranges between 300 - 400 nm.

Further subject of the invention is a luminescent polymer film comprising a plurality of dual-band luminescent nanoparticles as defined in claims 1 - 4, characterised in that it comprises a polymer matrix infused with dual-band luminescent nanoparticles, wherein the weight ratio of polymer in polymer matrix to dual-band luminescent nanoparticles is 0.3 to 1.2: 0.01 to 0.07, preferably 1:0,05.

Preferably the polymer matrix is made of thermoplastic polymer selected from group comprising: (poly(vinyl chloride) (PVC), polymethylmethacrylate (PMMA)), polyethylene (PE).

Another subject of the invention is a manufacturing method of luminescent dual-band nanoparticles according to the invention, characterised in that it comprises a following steps:
- preparing water solutions of yttrium, ytterbium, thulium, and europium chlorides separately by dissolving their oxides in 2-fold excess of concentrated hydrochloric acid to obtain solutions of concentrations 0.5M in amount of 0.100 L, 1.5 M in amount of 0.050 L, 0.5M in amount of 0.100 L, 0.5M in amount of 0.100 L, respectively;
- mixing the obtained solutions in stochiometric ratio x: y: z = 0.2: 0.05: 0.005 in relation to the formula **NaY**₁-x-y-x**Yb**ₓ**Eu**_{y}**Tm**_{z}**F**₄ and adding water in amount at least two times higher than overall amount of lanthanide ions solution;
- adding dropwise the solution of 0.01 M sodium citrate in water prepared at a room temperature, preferably at 25°C to achieve 1:1 molar ratio of sodium citrate: overall lanthanides ions;
- adding 75 ml of 0.04 M solution of cetyltrimethylammonium bromide in water prepared at a room temperature, preferably 25°C, to the combined aqueous chlorides solutions;
- adding the solution of sodium fluoride dissolved in water at a room temperature preferably 25 °C, in an amount of 3-6-fold molar excess, preferably 4-fold molar excess relative to the overall number of moles of Ln³⁺ ions, after which the mixture is magnetically mixed to obtain a homogeneous mixture at room temperature, preferably 25°C;
after all, the resulting mixture undergoes the reaction under hydrothermal conditions in a temperature T in the range 150°C < T < 200 °C preferably at 180 °C for t 800 < t < 1000 min, preferably 900 min and then the mixture is centrifuged, and the obtained precipitate is washed several times with water and with ethanol, and dried in an oven at 40-90 °C, preferably 75°C for 500 -720 min, preferably 600 min, the obtained precipitate is ground to obtain dual-band luminescent nanoparticles;

Further object of the invention is a manufacturing method of luminescent polymer film according to the incention, characterised in that it comprises a following steps:
- dissolving of 0.3-1.2 g of polymer in 5<v<10 ml, preferably 1 g in 7,5 ml of an organic solvent, stirring magnetically for 20< t< 40 at temperature 150< T < 220 °C;
- adding dual-band luminescent nanoparticles according to the invention in an amount from 0.01 to 0,07 g, preferably 0.025g and stirring to obtain a homogeneous mixture;
- pouring the obtained mixture onto a Petri dish and leaving it to dry at room temperature, after which the finished thin film layer is gently removed with a plastic spatula;
wherein the weight ratio of polymer: dual-band luminescent nanoparticles is 0.3 to 1.2: 0.01 to 0.07, preferably 1:0,05.

Preferably the polymer is selected from group comprising: (poly(vinyl chloride) (PVC), polymethylmethacrylate (PMMA), polyethylene (PE).

Also, the subject of the invention is an application of the luminescent polymer film according to the invention in preventing of counterfeiting of products selected from group comprising: certificates, diplomas, packaging, garment preferably as anti-counterfeiting tags.

The luminescent nanoparticles are nanocrystals of the rare earth element fluorides NaREF₄ (RE = yttrium, gadolinium) doped with ytterbium Yb³⁺ ions in an amount of 10% to 25%, preferably 20%, thulium Tm³⁺ in an amount of 0.25% to 1%, preferably 0.5% and europium Eu³⁺ from 1% to 7%, preferably 5%.

In summary the polymer luminescent film according to the invention due to the presence of invisible in daylight luminescent nanoparticles can provide the protection against counterfeiting. The polymer luminescent film structure is enriched with luminescent nanoparticles (they emit colored visible light), whose dual-band activation is possible after both ultraviolet (UV) and near-infrared (NIR) irradiation. The advantage of such polymer luminescent film is possibility to identify the presence of a security feature made of such film in two stages, namely in the first stage, the so-called "naked eye" observation is possible after radiation exposure. The second level of verification of the originality of the security feature is its identification using a device that reads the emission spectrum, which is the "pattern" of the light. What is important, as the light source activating the luminescence changes, the light's color changes. Such verification method significantly increases the verification reliability.

Another advantage of polymer luminescent film according to the invention is that the phenomenon of dual-band activation and two-color light emission takes place within a single luminescent modifier, thanks to which the amount of modifier added to the polymer is small (up to 3% of the fiber mass), which eliminates the likelihood of the thread being damaged, its mechanical durability or resistance to tearing, which could make it impossible to produce the film. It also reduces the production costs since it is not necessary to run two technological processes to produce two-colour modifiers activated under the influence of two different light bands.

A luminescent polymer film according to the invention is a foil with a structure consisting of a polymer incorporating luminescent nanoparticles inside and on the film's surface. The luminescent properties of the film stem from the presence of these nanoparticles. The nanoparticles are distributed evenly within the polymer matrix, enhancing luminescence throughout the film's structure.

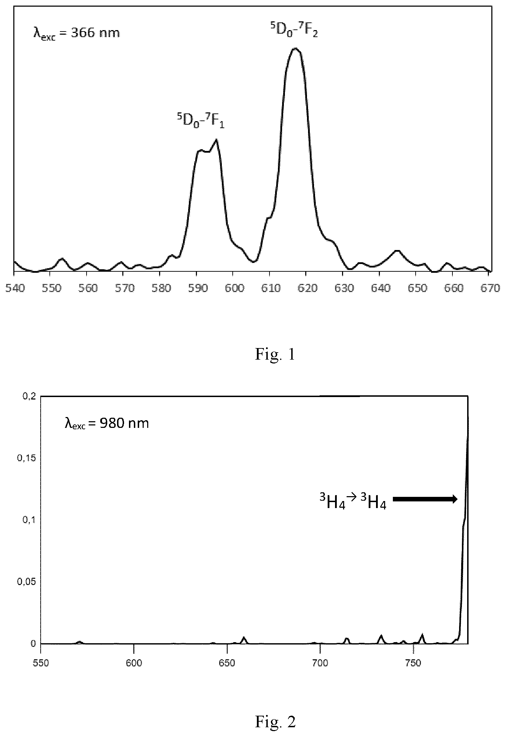

The luminescent nanoparticles applied in a polymer luminescent film according to the invention are inorganic chemical compounds composed of crystallites with a size not exceeding 100 nm. These nanoparticles possess a highly crystalline and homogeneous structure, emitting visible light in multiple colors upon excitation by electromagnetic radiation from the ultraviolet and near-infrared range. Lanthanide ions (Ln³⁺) are doped within the inorganic host nanocrystals of the nanoparticles, which do not exhibit luminescent properties. Inorganic host nanocrystals, particularly rare-earth-based fluorides (e.g., NaYF₄, NaYbF₄), are optimal for Ln³⁺ doping across a broad range of concentrations. These materials exhibit a low phonon energy of approximately 300 cm⁻¹, an excellent characteristic for efficient luminescence production without quenching effects caused by the matrix and provide high-intensity visible light emission from Ln³⁺ ions. The emitting Ln³⁺ exhibit distinctive spectroscopic properties originating from f-f electron transitions, enabling multi-color visible light emission upon activation by ultraviolet (red emission, Fig. 1) and near-infrared radiation (light violet emission, Fig. 2). Consequently, lanthanide compounds find applications in various fields, including photovoltaics and biomedicine, as cancer cell tracers or contrast agents in bioimaging.

Importantly, luminescent nanoparticles with sizes up to 100 nm, emitting visible light of diverse colors depending on the excitation radiation (ultraviolet or near-infrared), hold great importance. These dual-band luminescent nanoparticles according to the invention enable seamless integration within a single material, eliminating the need for multiple compounds that may compromise mechanical properties or diminish luminescence. These nanomaterials exhibit tunable emission, whereby ultraviolet activation produces one luminescent color due to a downshifting process, while near-infrared activation results in a distinct color due to upward energy conversion processes (up-converting processes). While some systems show a single type of conversion process, nanomaterials offer the desirable effect of tunable visible emission, providing specific luminescent colors for ultraviolet and near-infrared activation. Luminescent nanoparticles introduced (inside and on the surface) into other materials, such as polymers, enrich their characteristics with luminescent properties. Such a polymer can be further used to produce the foil.

Moreover, application of lanthanide chlorides in preparation method according to the invention provides a nanoparticle of better spectral response due to the smaller number of defects on the dual-band luminescent nanoparticle surface. Hydrothermal reactor designed for preparation method according to the invention has relatively high volume of 400 ml what gives opportunity to synthesise the nanoparticle of finest crystalline structure compared to materials according to state of the art. Such material gives better results in terms of distribution within polymer matrix and reliability of spectral response of luminescent film according to the invention.

Invention has been illustrated with following figures:
Fig. 1 Emission spectrum showing typical Eu³⁺ ions' bands in the red region of visible light. The excitation wavelength is in the UV range (365 nm (UV range)).
Fig. 2 Emission spectrum showing Tm³⁺ ions' band. The excitation wavelength is in the NIR range 975 (NIR range).

Invention has been illustrated in following examples.

### Examples

Water solutions of rare earth element chlorides (yttrium, ytterbium, thulium, and europium) have been prepared separately by dissolving their corresponding oxides in a 2-fold excess of concentrated hydrochloric acid (35-37%). This procedure results in solutions with specific concentrations and volumes: 0.5M (0.100 L) for yttrium chloride, 1.5M (0.050 L) for ytterbium chloride, 0.5M (0.100 L) for thulium chloride, and 0.5M (0.100 L) for europium chloride.

To achieve this, the excess hydrochloric acid is subjected to evaporation three times until the lanthanide chloride approaches a dry state. After each evaporation cycle, 10 mL of water is added, followed by subsequent evaporation. This process is repeated three times, ensuring that water is added after each evaporation step.

Prepared solutions have been used in preparation of luminescent nanoparticles according to the procedures presented below.

Those procedures which have been indicated as carried out in 25 °C can be also carried out at room temperature understood as range between 15-30 °C. Temperature of 25 °C indicated in following Examples is preferred temperature.

### Example 1

The dual-band luminescent nanoparticles are host nanocrystals of the rare earth element fluorides of general formula NaREF₄ (RE = yttrium, Y) doped with ytterbium Yb³⁺ ions in an amount of 20%, thulium Tm³⁺ in an amount of 0.5% and europium Eu³⁺ in an amount of 5%.

### Prepearation of dual-band luminescent nanoparticles

The manufacturing method consists of the first step of preparing water solutions of the rare earth elements chlorides of yttrium, ytterbium, thulium, and europium by dissolving their oxides (Y₂O₃, Yb₂O₃, Tm₂O₃, Eu₂O₃, Standford Materials, 99.99%) in concentrated hydrochloric acid (35%-37%, Merck, ACS reagent) to obtain solutions of concentrations 0.5M (0.100 L), 1.5 M (0.050 L), 0.5M (0.100 L) 0.5M (0.100 L), respectively. Next, the lanthanide chlorides are mixed in stochiometric amounts in relation to the formula **NaY**₁-x-y-z**Yb**ₓ**Eu**_{y}**Tm**_{z}**F**₄ (x = 0.2, y = 0.05. z = 0.005) to form a mixture, and 50 ml of water is added (two times more than amount of all Ln³⁺ ions solution used). Then, an appropriate amount of sodium citrate (POCH, ACS reagent) to achieve a molar ratio 1:1 of sodium citrate: Ln³⁺ ions, is dissolved in 50 ml of water at a temperature of 25°C and added dropwise to the aqueous lanthanide chlorides mixture. Subsequently, a 75 ml of 0.04 M solution of cetyltrimethylammonium bromide (CTAB, Merck, 99%) prepared at a temperature of 25°C is added to the aqueous lanthanide chlorides and sodium citrate mixture. Then, sodium fluoride (POCH, ACS reagent) dissolved in 50 ml of water at a temperature of 25 °C is added in a 4-fold molar excess relative to overall number of moles of lanthanide ions. In the next step the mixture is magnetically mixed to obtain a homogeneous mixture at solution temperature 25°C. The resulting mixture is then subjected to a synthesis process in a reactor under hydrothermal conditions defined by a temperature T 180 °C for 900 min. At the end of the hydrothermal synthesis process, the resulting mixture is centrifuged, and the precipitate obtained is washed three times with 25 ml of water for each washing and finally one time with 25 ml of ethanol, dried in an oven at 75°C for 600 min. Next, the precipitate obtained is ground in an agate mortar to get a luminescent modifier in the form of nanopowder containing dual-band luminescent nanoparticles. The average grain size of the nanoparticles was 62±5 nm. It was calculated using the Scherrer equation.

### Preparation of polymer luminescent film according to the invention comprising polymer matrix infused with dual-band luminescent nanoparticles.

0.5 g of polymer - polymethylmethacrylate (PMMA)) dissolved in 7,5 ml of toluene is stirred magnetically at 180° C for 30 minutes. Afterwards, 0.025 g of prepared nanopowder of luminescent modifier is introduced into an obtained solution of PMMA in toluene and stirred magnetically at 180° C for 5 minutes to obtain a homogeneous mixture. Finally, the resulting mixture is poured onto Petri dishes and left to dry at room temperature, after which the finished thin film layer is gently removed with a plastic spatula.

### Example 2

The dual-band luminescent nanoparticles are host nanocrystals of the rare earth element fluorides NaREF₄ (RE = yttrium, Y) doped with ytterbium Yb³⁺ ions in an amount of 15%, thulium Tm³⁺ in an amount of 0.5% and europium Eu³⁺ in an amount of 3%.

### Preparation of dual-band luminescent nanoparticles according to the invention

The manufacturing method consists of the first step of preparing water solutions of the rare earth elements chlorides of yttrium, ytterbium, thulium, and europium by dissolving their oxides in concentrated hydrochloric acid (35- 37%) to obtain solutions of concentrations 0.5M (0.100 L), 1.5 M (0.050 L), 0.5M (0.100 L) 0.5M (0.100 L), respectively. Next, the lanthanide chlorides are mixed in stochiometric amounts in relation to the formula **NaY**₁-x-y-z**Yb**ₓ**Eu**_{y}**Tm**_{z}**F**₄ (x = 0.2, y = 0.05. z = 0.005) to form a mixture, and 50 ml of water is added (two times more than amount of all Ln³⁺ ions solution used). Then, an appropriate amount of sodium citrate to achieve a molar ratio 1:1 of sodium citrate: Ln³⁺ ions, is dissolved in 50 ml of water at a temperature of 25°C and added dropwise to the aqueous lanthanide chlorides mixture. Subsequently, a 75 ml of 0.04 M solution of cetyltrimethylammonium bromide prepared at a temperature of 25°C is added to the aqueous lanthanide chlorides and sodium citrate mixture. Next sodium fluoride dissolved in 50 ml of water at a temperature of 25 °C is added in a 5-fold excess to the total number of moles of all the lanthanide ions after which the mixture is magnetically mixed to obtain a homogeneous mixture at solution temperature 25°C. The resulting mixture is then subjected to a synthesis process in a reactor under hydrothermal conditions defined by a temperature T 180 °C for 900 min. At the end of the hydrothermal synthesis process, the resulting mixture is centrifuged, and the precipitate obtained is washed three times with 25 ml of water for each washing and one time and finally with 25 ml of ethanol, after which it is dried in an oven at 75°C for 600 min. Next, the precipitate obtained is ground in an agate mortar to get a luminescent modifier in the form of nanopowder containing dual-band luminescent nanoparticles. The average grain size of nanoparticles is the same as in the case of Example 1.

### Preparation of polymer luminescent film according to the invention comprising polymer matrix

*infused with dual-band luminescent nanoparticles.* 1 g of polymer polymethylmethacrylate (PMMA)) dissolved in 7,5 ml of toluene, then stirred magnetically at 180° C for 30 minutes. Afterward, 0.05 g of prepared nanopowder is introduced into an obtained solution of PMMA in toluene and stirred magnetically at 180° C for 5 minutes to obtain a homogeneous mixture. Finally, the resulting mixture is poured onto Petri dishes and left to dry at room temperature, after which the finished thin film layer is gently removed with a plastic spatula.

### Example 3

The dual-band luminescent nanoparticles are host nanocrystals of the rare earth element fluorides NaREF₄ (RE = yttrium, Y) doped with ytterbium Yb³⁺ ions in an amount of 20%, thulium Tm³⁺ in an amount of 0.5% and europium Eu³⁺ in an amount of 5%.

### Preparation of dual-band luminescent nanoparticles.

The manufacturing method consists of the first step of preparing water solutions of the rare earth elements chlorides of yttrium, ytterbium, thulium, and europium by dissolving their oxides in concentrated hydrochloric acid (35- 37%) to obtain solutions of concentrations 0.5M (0.100 L), 1.5 M (0.050 L), 0.5M (0.100 L) 0.5M (0.100 L), respectively. Next, the lanthanide chlorides are mixed in stochiometric amounts in relation to the formula **NaY₁**-x-y-z**Yb**ₓ**Eu**_{y}**Tm**_{z}**F**₄ (x = 0.2, y = 0.05, z = 0.005) to form a mixture, and 50 ml of water is added (two times more than amount of all Ln³⁺ ions solution used). Then, an appropriate amount of sodium citrate to achieve a molar ratio 1:1 of sodium citrate: Ln³⁺ ions, is dissolved in 50 ml of water at a temperature of 25°C and added dropwise to the aqueous lanthanide chlorides mixture. Then, cetyltrimethylammonium bromide (CTAB) dissolved in 75 ml of water at a temperature of 25°C is added to the aqueous lanthanide chlorides and sodium citrate mixture. Next sodium fluoride dissolved in 50 ml of water at a temperature of 25 °C is added, preferably in an amount of 4-fold excess to the total number of moles of all the lanthanide ions after which the mixture is magnetically mixed to obtain a homogeneous mixture at solution temperature 25°C. The resulting mixture is then subjected to a synthesis process in a reactor under hydrothermal conditions defined by a temperature T 180 °C for 900 min. At the end of the hydrothermal synthesis process, the resulting mixture is centrifuged, and the precipitate obtained is washed three times with 25 ml of water for each washing and finally, one time with 25 ml of ethanol, after which it is dried in an oven at 75°C for 600 min. Next, the precipitate obtained is ground in an agate mortar to get a luminescent modifier in the form of nanopowder containing dual-band luminescent nanoparticles. The average grain size of nanoparticles is the same as in the case of Example 1.

### Preparation of polymer luminescent film according to the invention comprising polymer matrix infused with dual-band luminescent nanoparticles.

0.5 g of polymer - (poly(vinyl chloride) (PVC), dissolved in 7,5 ml of toluene, then stirred magnetically at 180° C for 30 minutes. Afterward, 0.025 g of prepared nanopowder is introduced into an obtained solution of PVC in toluene and stirred magnetically at 180° C for 5 minutes to obtain a homogeneous mixture. Finally, the resulting mixture is poured onto Petri dishes and left to dry at room temperature, after which the finished thin film layer is gently removed with a plastic spatula.

### Example 4

### Manufacture of packaging tags containing lu polymers modified with dual-band luminescent nanoparticles NaYF₄ doped with Yb³⁺/Tm³⁺/Eu³⁺ ions.

Luminescent film according to the invention has been used to produce a foil of anti-counterfeiting application containing luminescent polymers with dual-band luminescent nanoparticles, it covers the surface of the packaging or is used as a sticky film in a known manner. By applying radiation of an appropriate wavelength (laser or xenon lamp), i.e., 980 (NIR) or 366 nm (UV) to the label thus sewn into the garment, the emission of the foil (dual-band luminescent nanoparticles) of a characteristic light violet color under NIR (Fig. 2) and red under UV (Fig. 1) and of an appropriate intensity (recorded with a portable/mobile spectrophotometer) is obtained, consistent with the spectroscopic spectra for luminescent polymer film according to the Example 1 and 2.

Film according to the invention has also a potential application as a tag for documents, certificates, diplomas instead of holographic tag for example. Such tags are anti-counterfeiting safeguard.

## Claims

1. A Dual-band luminescent nanoparticle comprising host nanocrystal doped with lanthanide ions, **characterised in that** the host nanocrystal is the nanocrystal of rare earth element fluorides of following formula:
NaREF₄
where RE - yttrium, gadolinium
doped with lanthanides ions selected from the group comprising ytterbium Yb³⁺ ions, thulium Tm³⁺ ions, europium Eu³⁺ ions and combination thereof; wherein the ions are included into the host nanocrystal in amount between 10% to 25% for ytterbium Yb³⁺, preferably 20%, in amount between 0.25% to 1% for thulium Tm³⁺, preferably 0,5% and in amount between 1% to 7% for europium Eu³⁺, preferably 5%.

2. The dual-band luminescent nanoparticle according to claim 1, **characterised in that** the average grain size of the nanoparticle is between 50 - 70 nm.

3. The dual-band luminescent nanoparticle according to claim 1 or 2, **characterised in that** it emits visible light upon NIR and UV light excitation.

4. The dual-band luminescent nanoparticle according to any preceding claims, **characterised in that** NIR ranges between 900 -1000 nm and UV ranges between 300 - 400 nm.

5. A Luminescent polymer film comprising a plurality of dual-band luminescent nanoparticles as defined in claims 1 - 4, **characterised in that** it comprises a polymer matrix infused with dual-band luminescent nanoparticles, wherein the weight ratio of polymer in polymer matrix to dual-band luminescent nanoparticles is 0.3 to 1.2: 0.01 to 0.07, preferably 1:0,05.

6. The Luminescent polymer film according to claim 5, **characterised in that** the polymer matrix is made of thermoplastic polymer selected from group comprising: (poly(vinyl chloride) (PVC), polymethylmethacrylate (PMMA)), polyethylene (PE).

7. A manufacturing method of luminescent dual-band nanoparticles as defined in claims 1-4, **characterised in that** it comprises a following steps:
- preparing water solutions of yttrium, ytterbium, thulium, and europium chlorides separately by dissolving their oxides in 2-fold excess of concentrated hydrochloric acid to obtain solutions of concentrations 0.5M in amount of 0.100 L, 1.5 M in amount of 0.050 L, 0.5M in amount of 0.100 L, 0.5M in amount of 0.100 L, respectively;
- mixing the obtained solutions in stochiometric ratio x: y: z = 0.2: 0.05: 0.005 in relation to the formula **NaY**₁-x-y-x**Yb**ₓ**Eu**_{y}**Tm**_{z}**F**₄ and adding water in amount at least two times higher than overall amount of lanthanide ions solution;
- adding dropwise the solution of 0.01 M sodium citrate in water prepared at a room temperature, preferably at 25°C to achieve 1: 1 molar ratio of sodium citrate: overall lanthanides ions;
- adding 75 ml of 0.04 M solution of cetyltrimethylammonium bromide in water prepared at a room temperature, preferably 25°C, to the combined aqueous chlorides solutions;
- adding the solution of sodium fluoride dissolved in water at a room temperature preferably 25 °C, in an amount of 3-6-fold molar excess, preferably 4-fold molar excess relative to the overall number of moles of Ln³⁺ ions, after which the mixture is magnetically mixed to obtain a homogeneous mixture at room temperature, preferably 25°C;
after all, the resulting mixture undergoes the reaction under hydrothermal conditions in a temperature T in the range 150°C < T < 200 °C preferably at 180 °C for t 800 < t < 1000 min, preferably 900 min and then the mixture is centrifuged, and the obtained precipitate is washed several times with water and with ethanol, and dried in an oven at 40-90 °C, preferably 75°C for 500 -720 min, preferably 600 min, the obtained precipitate is ground to obtain dual-band luminescent nanoparticles;

8. A manufacturing method of luminescent polymer film as defined in claims 5-6, **characterised in that** it comprises a following steps:
- dissolving of 0.3-1.2 g of polymer in 5<v<10 ml, preferably 1 g in 7,5 ml of an organic solvent, stirring magnetically for 20< t< 40 at temperature 150< T < 220 °C;
- adding dual-band luminescent nanoparticles as defined in claims 1-4 in an amount from 0.01 to 0,07 g, preferably 0.025g and stirring to obtain a homogeneous mixture;
- pouring the obtained mixture onto a Petri dish and leaving it to dry at room temperature, after which the finished thin film layer is gently removed with a plastic spatula;
wherein the weight ratio of polymer: dual-band luminescent nanoparticles is 0.3 to 1.2: 0.01 to 0.07, preferably 1:0,05.

9. The method according to claim 8, **characterised in that,** the polymer is selected from group comprising: (poly(vinyl chloride) (PVC), polymethylmethacrylate (PMMA), polyethylene (PE).

10. An application of the luminescent polymer film as defined in claims 5-6 in preventing of counterfeiting of products selected from group comprising: certificates, diplomas, packaging, garment preferably as anti-counterfeiting tags.
